# EUROPEAN PATENT APPLICATION

(11) **EP 4 704 445 A1**
(43) Date of publication of application: **04.03.2026**
(21) Application number: 23934340.3
(22) Date of filing: 23.04.2023
(51) Int. Cl.: H04W 4/02

(54) **COMMUNICATION METHOD AND SYSTEM, AND COMPUTER-READABLE STORAGE MEDIUM**

(71) Applicant: Guangdong Coros Sports Technology Co., Ltd, Dongguan, Guangdong 523000 (CN)
(72) Inventor: CHEN, Zhonghe, Dongguan, Guangdong 523000 (CN); SHI, Xianwei, Dongguan, Guangdong 523000 (CN); CHEN, Kai, Dongguan, Guangdong 523000 (CN)
(74) Representative: Appelt, Christian W.
(86) International application number: PCT/CN2023/090081
(87) International publication number: WO 2024/221134

(57) **Abstract**

The present disclosure is suitable for the communication technology field and provides a communication method and system, and a computer-readable storage medium. The communication method includes determining a target terminal from a plurality of terminals, a first distance between the target terminal and a predetermined position being less than or equal to a predetermined distance, controlling the target terminal to obtain first information from a first information transmission terminal, and controlling the target terminal to forward the obtained first information. In the communication of the present disclosure, the target terminal is determined from the plurality of terminals, and the target terminal obtains and forwards the information, which reduces the communication cost and improves the flexibility of the communication.

## Description

### TECHNICAL FIELD

The present disclosure generally relates to the communication technology field and, more particularly, to a communication method and system, and a computer-readable storage medium.

### BACKGROUND

With the development of technology and the improvement of requirements for life quality, running, hiking, mountaineering, etc., have gradually developed into regular forms of exercise. In application scenarios such as outdoor sports and outdoor rescue, to achieve communication, a relay method is usually adopted. For example, if information from terminal A needs to be sent to terminal B, a relay device can be used. The relay device first receives the information from terminal A and then sends the received information to terminal B. A communication range is broadened through a relay communication manner, and communication efficiency is improved.

At present, the relay device is usually a large-scale relay device or requires a special carrier such as a vehicle to carry, which increases the communication cost. Moreover, in some special scenarios (e.g., cross-country running, rescue operations involving a plurality of participants), the communication quality among most of the users is difficult to ensure, which reduces the flexibility of the communication system.

### SUMMARY

The present disclosure provides a communication method and system, and a computer-readable storage medium, which reduces the communication cost and improves the flexibility of the communication.

In a first aspect, embodiments of the present disclosure provide a communication method applied to a communication system. The communication system includes a plurality of terminals, and the plurality of terminals include a first information transmission terminal. The communication method includes:
determining a target terminal from the plurality of terminals, a first distance between the target terminal and a predetermined position being less than or equal to a predetermined distance;
controlling the target terminal to obtain first information from the first information transmission terminal; and
controlling the target terminal to forward the obtained first information.

In the communication method provided in the first aspect, the target terminal is determined from the plurality of terminals. The target terminal forwards the information. Thus, the relay communication among different terminals is realized in the communication system. Since a relay device is a terminal of the plurality of terminals, no additional large relay device is needed. Thus, the communication cost is saved, the communication distance between terminals of the communication system is expanded, and the flexibility of the communication is improved.

In a second aspect, embodiments of the present disclosure provide a communication system, including a plurality of terminals. The terminals are configured to realize the method provided in the first aspect above.

In a third aspect, embodiments of the present disclosure provide a terminal device, including a memory, a processor, and a computer program stored in the memory and executable the processor. When the computer program is executed, the processor is configured to realize the method provided in the first aspect above.

In a fourth aspect, embodiments of the present disclosure provide a computer-readable storage medium storing a computer program that, when executed, the method provided in the first aspect above is implemented.

### BRIEF DESCRIPTION OF THE DRAWINGS

In order to more clearly explain the technical solutions of embodiments of the present disclosure, a brief introduction to the accompanying drawings needed for the description of embodiments or related art is provided below. The accompanying drawings described below are merely some embodiments of the present disclosure. For those of ordinary skill in the art, other drawings can also be obtained based on these accompanying drawings without creative effort.
FIG. 1 is a schematic architectural diagram of a system according to some embodiments of the present disclosure.
FIG. 2 is a schematic flowchart of a communication method according to some embodiments of the present disclosure.
FIG. 3 is a schematic diagram showing positions of terminals in a communication system according to some embodiments of the present disclosure.
FIG. 4 is another schematic diagram showing positions of terminal in a communication system according to some embodiments of the present disclosure.
FIG. 5 is another schematic diagram showing positions of terminals in a communication system according to some embodiments of the present disclosure.
FIG. 6 is another schematic diagram showing positions of terminals in a communication system according to some embodiments of the present disclosure.
FIG. 7 is a schematic structural diagram of a terminal device according to some embodiments of the present disclosure.

### DETAILED DESCRIPTION OF THE EMBODIMENTS

In the following description, specific details such as particular system structures and technologies are provided for illustration rather than limitation, to facilitate a thorough understanding of embodiments of the present disclosure. However, those skilled in the art should be clear that the present disclosure can also be implemented in other embodiments without these specific details. In other cases, detailed descriptions of well-known systems, devices, circuits, and methods are omitted to avoid unnecessary details hindering the description of the present disclosure.

It should be understood that when used in the present disclosure specification and the appended claims, the term "comprising" indicates the presence of the described features, wholes, steps, operations, elements, and/or assemblies but does not exclude the presence or addition of one or more other features, wholes, steps, operations, elements, assemblies, and/or combinations thereof.

It should also be understood that the term "and/or" used in the specification and appended claims of the present disclosure refers to any and all possible combinations of the listed items and includes these combinations.

As used in the specification and the appended claims of the present disclosure, the term "if" can be interpreted according to the context as "when," "once," "in response to determining," or "in response to detecting." Similarly, the phrases "if determined" or "if detected [the described condition or event]" can be interpreted according to the context as "once determined," "in response to determining," "once detected [the described condition or event]," or "in response to detecting [the described condition or event]."

Additionally, in the description of the specification and appended claims of the present disclosure, the terms "first," "second," "third," etc., are only used to differentiate descriptions and should not be understood as indicating or implying relative importance.

The references to "one embodiment" or "some embodiments" in the specification of the present disclosure mean that a particular feature, structure, or characteristic described in conjunction with the embodiment is included in one or more embodiments of the present disclosure. Therefore, the phrases "in one embodiment," "in some embodiments," "in other embodiments," "in further embodiments," etc., appearing in different sections of the present specification do not necessarily refer to the same embodiment but rather mean "one or more but not all embodiments," unless specifically emphasized otherwise. The terms "comprising," "including," "having," and their variations all mean "including but not limited to," unless specifically emphasized otherwise.

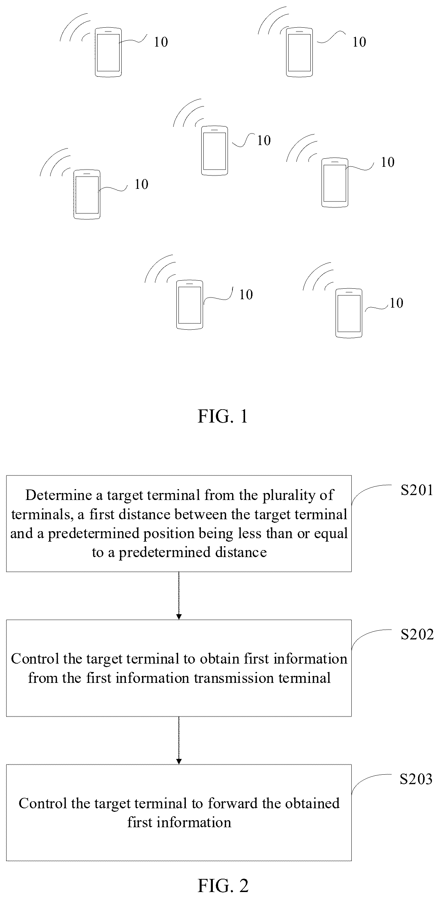

FIG. 1 is a schematic architectural diagram of a system according to some embodiments of the present disclosure. The communication system includes a plurality of terminal devices 10. For example, the terminal devices 10 can be cell phones, and information can be transmitted in the form of radio signals among the terminal devices 10.

It should be understood that the number of terminal devices 10 in FIG. 1 is only for exemplary description, and embodiments of the present disclosure are not limited to this.

Embodiments of the present disclosure do not limit the names and types of terminal devices. For example, terminal devices can also be referred to as terminals, electronic devices, or communication devices. The terminal devices can include cell phones, tablets, wearable devices, in-vehicle devices, augmented reality (AR)/virtual reality (VR) devices, laptops, ultra-mobile personal computers (UMPCs), netbooks, personal digital assistants (PDAs), etc.

The application scenarios of the present disclosure can include outdoor activities such as cross-country running, hiking, and mountaineering, as well as outdoor rescue scenarios. In these application scenarios, a plurality of users can be included. Each user can hold at least one terminal device. Different users can communicate with each other by operating the hold terminal devices. That is, one user can send information to or receive information from other users.

In application scenarios such as outdoor activities and outdoor rescue, communication typically requires a large and highly flexible communication range, and the communication distance between different terminal devices may be relatively far. In the existing technology, a large relay can be used or a special carrier such as a vehicle can be used to expand the communication range. However, the communication cost can be increased, and the flexibility of the communication system can be lowered.

Embodiments of the present disclosure provide a communication method. The communication system can include a plurality of terminals. A target terminal can be determined from the plurality of terminals. The target terminal can obtain first information that a first information transmission terminal sends. Then, the target terminal can forward the obtained first information to other terminals. By determining the target terminal from the plurality of terminals, and the target terminal being a relay device and obtaining and forwarding information, the communication cost in the application scenarios such as the outdoor exercise and the outdoor rescue can be lowered, and the flexibility of the communication can be increased.

The technical solutions of the present disclosure can be described in detail with embodiments of the present disclosure. The following embodiments can be combined with each other. Same or similar concepts or processes may not be repeated in some embodiments.

FIG. 2 is a schematic flowchart of a communication method according to some embodiments of the present disclosure. The communication method can be applied to a communication system. The communication system can include a plurality of terminals. The plurality of terminals can include a first information transmission terminal. The first information transmission terminal can send first information. As an example but not limitation, as shown in FIG. 2, the method includes the following processes.

At S201, a target terminal is determined from the plurality of terminals. A first distance between the target terminal and a preset position is less than or equal to a predetermined distance.

In some embodiments, the target terminal can be selected from the plurality of terminals. The target terminal can serve as a relay terminal for the plurality of terminals to receive and forward information. Thus, different terminals of the plurality of terminals can communicate with each other. Since the relay device is selected from the plurality of terminals, an additional large relay device may not be needed. Thus, the communication cost can be saved, and the flexibility of the communication can be improved.

The predetermined position can be within the communication coverage range of the plurality of terminals of the communication system. Depending on factors such as the positions of the plurality of terminals in the communication system, a maximum communication distance of a terminal, a terminal device sending the information, and a terminal device receiving the information, the predetermined position can be different.

It should be noted that embodiments of the present disclosure do not limit the number of target terminals, the number of the predetermined positions, or the value of the predetermined distance. For example, if the plurality of terminals in the communication system are located in relatively close proximity, one predetermined position and one target terminal are used. Other terminals in the communication system excluding the target terminal can communicate through the target terminal. As another example, two terminals with a relatively large distance can be provided in the communication system. When the two terminals communicate, at least one predetermined position can be provided. A plurality of target terminals can be provided. The information can be forwarded through the plurality of target terminals to realize the communication between the two terminals. For example, terminal A can send information to terminal B. Two target terminals can be determined as terminal C and terminal D. Terminal A can first send information to terminal C, and terminal C can forward the information to Terminal D. Terminal D can forward the information to terminal B. Then, terminal A can communicate with terminal B through terminal C and terminal D.

To facilitate explanation, the scenario with one predetermined position and one target terminal is used as an example.

In some embodiments, the communication method can further include:
determining a first terminal and a second terminal from the plurality of terminals.

At S201, determining the target terminal from the plurality of terminals can include:
determining the predetermined position according to positions of the first terminal and the second terminal; and
determining the target terminal according to the predetermined position.

In some embodiments, the predetermined position can be a middle point of the connection line between the first terminal and the second terminal.

In some embodiments, the predetermined position can be determined according to the position of the first terminal and the position of the second terminal to determine the target terminal. The predetermined position can be determined according to the position of the terminal in the actual communication process to improve the accuracy of determining the predetermined position and the target terminal.

In some embodiments, a second distance between the first terminal and the second terminal can be greater than a second distance between any other two terminals of the plurality of terminals, other than the first terminal and the second terminal.

In some embodiments, the first terminal and the second terminal can be two terminals with the largest distance therebetween among the plurality of terminals. The positions of the first terminal and the second terminal can indicate the current maximum communication range of the communication system. Therefore, the predetermined position can be determined according to the positions of the first terminal and the second terminal to determine the target terminal to more comprehensively cover the communication range and realize communication between any two terminals in the communication system. In some embodiments, each terminal of the plurality of terminals can include a positioning apparatus to obtain the position of each terminal of the plurality of terminals. The distance between each two terminals of the plurality of terminals can be calculated according to the position of each terminal. The two terminals with the largest distance can be determined as the first terminal and the second terminal.

In some embodiments, determining the first terminal and the second terminal from the plurality of terminals can include:
obtaining the second distance between all pairs of terminals among the plurality of terminals; and
determining the two terminals with the largest second distance as the first terminal and the second terminal.

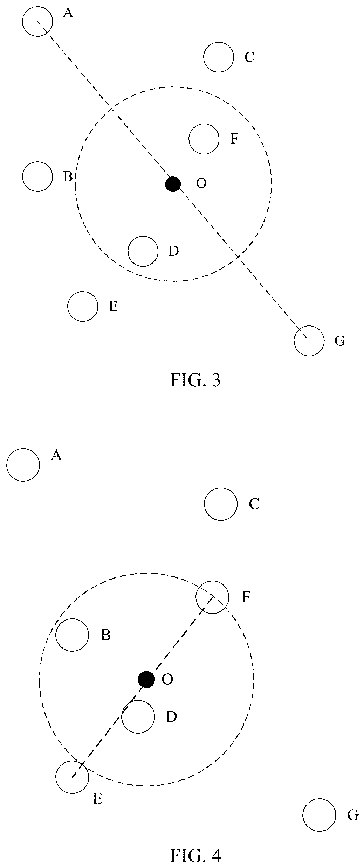

For example, as shown in FIG. 3, illustrative description is given by using circles ABCDEFG as the plurality of terminals. First, the second distances each between any two terminals of the plurality of terminals can be obtained and include second distances between terminal A and terminals B to G, second distances between terminal B and terminals C to G, and so on, with a total of 21 second distances. Among all the second distances, the second distance between terminal A and terminal G is the largest. Thus, terminal A and terminal G can be determined as the first terminal and the second terminal. The predetermined position can be determined according to the positions of terminal A and terminal G. For example, the predetermined position can be the middle point of the connection line between terminal A and terminal G and can be denoted as O.

In some other embodiments, the communication method can further includes:
determining the first information transmission terminal as the first terminal.

In some embodiments, the first information transmission terminal can be the first terminal. The predetermined position can be determined according to the terminal that needs to transmit the first information to determine the target terminal. Thus, the transmission of the first information can be ensured, and the transmission success rate of the information can be improved.

In some embodiments, the communication method can further include:
determining the terminal having the largest distance from the first information transmission terminal as the second terminal.

In some embodiments, the first terminal and the second terminal can be determined by considering the terminal transmitting the information and the communication distance. The predetermined position can be determined according to the first terminal and the second terminal to further determine the target terminal to ensure the first information to be transmitted. Meanwhile, the communication range can be considered to improve the information transmission success rate.

In some embodiments, the plurality of terminals can further include a first information reception terminal configured to receive the first information. The communication method can further include:
determining the first information reception terminal as the second terminal.

For example, as shown in FIG. 4, illustrative description is made by taking circles ABCDEFG as the plurality of terminals. Terminal F may need to send the first information to terminal E. Then, terminal F can be determined as the first terminal, and terminal E can be determined as the second terminal. According to the positions of terminal F and terminal E, the predetermined position can be determined. For example, the predetermined position can be the middle point O of the connection line between terminal F and terminal E.

In some embodiments, the two terminals that need to communicate can be determined as the first terminal and the second terminal. The predetermined position can be determined according to the positions of the two terminals that need to communicate to further determine the target terminal. Thus, the communication between two terminals can be ensured, and the terminal that needs to transmit the information can be more accurately serviced.

In some embodiments, the communication method can further include, after determining the predetermined position:
obtaining a first distance between each terminal and the predetermined position; and
determining terminals with the first distance less than or equal to the predetermined distance as candidate terminals.

At S201, determining the target terminal from the plurality of terminals can include:
determining the target terminal from the candidate terminals.

In some embodiments, the predetermined distance can be predetermined. Using the predetermined position as the center and the predetermined distance as the radius, all terminals within or on the boundary of the circle satisfy the condition that the first distance is less than or equal to the predetermined distance, and the terminals satisfying the condition can be determined as the candidate terminals. As shown in FIG. 3 and FIG. 4, middle point O of the connection line between terminal A and terminal G in FIG. 3 is the predetermined position, and middle point O of the connection line between terminal F and terminal E in FIG. 4 is the predetermined position. The predetermined distance can be the radius of a dashed line circle with O as the center. All the terminals within the circle or at the circle are the candidate terminals. The candidate terminals in FIG. 3 are terminal D and terminal F. The candidate terminals in FIG. 4 are terminal B and terminal D.

By determining the candidate terminals, the range of the target terminal can be reduced. By determining the target terminal from the candidate terminals, the accuracy of determining the target terminal can be improved.

In some embodiments, determining the target terminal from the candidate terminals can include:
obtaining the first distance between each candidate terminal and the predetermined position; and
determining the candidate terminal with the smallest first distance from the predetermined position as the target terminal.

For example, as shown in FIG. 3, the candidate terminals in FIG. 3 are terminal D and terminal F, and the predetermined position is O. The first distance between terminal F and O is the smallest. Terminal F is determined as the target terminal. For example, as shown in FIG. 4, the candidate terminals in FIG. 4 are terminal B and terminal D, and the predetermined position is O. The first distance between terminal D and O is the smallest. Terminal D is determined as the target terminal.

In some embodiments, communication with the plurality of terminals is facilitated at the predetermined position. The candidate terminal having the smallest distance from predetermined position of the candidate terminals can be determined as the target terminal to ensure that the plurality of terminals can communicate through the target terminal.

In some other embodiments, determining the target terminal from the candidate terminals can include:
obtaining signal quality of each candidate terminal; and
determining the candidate terminal with good signal quality as the target terminal.

In some embodiments, by selecting the candidate terminal with good quality as the target terminal, the quality of the communication of the plurality of terminals through the target terminal can be ensured.

In some embodiments, obtaining the signal quality of each candidate terminal can include:
controlling the first terminal or the second terminal to receive second information from the candidate terminals;
determining the signal quality of the second information according to the second information; and
determining the signal quality of the second information as the signal quality of the candidate terminal.

It should be noted that the signal quality of the second information can be determined by detecting a signal-to-noise ratio of the second information, detecting a carrier-to-interference ratio oof the second information, or detecting the size of data packet of the received second information. In some embodiments, the signal-to-noise ratio can be a ratio between the signal and the noise. The carrier-to-interference ratio can be a ratio a useful carrier power and an interference signal power. When the signal-to-noise ratio or the carrier-to-interference ratio is larger, the signal quality can be better. In some other embodiments, the second information with fixed size can be transmitted. When the data packet receiving the second information is larger, the signal quality can be better.

In some embodiments, the candidate terminal can send the second information. The first terminal can receive the second information transmitted by the candidate terminal, or the second terminal can receive the second information transmitted by the candidate terminal. Taking the first terminal as an example, the first terminal can determine the signal quality of the second information according to the second information received from the candidate terminals to determine the signal qualities of the candidate terminals. Then, by comparing the signal qualities of the candidate terminals, the candidate terminal with the best signal quality can be determined as the target terminal. Similarly, the second terminal can receive the second information from the candidate terminals to obtain the signal qualities of the candidate terminals, and the target terminal can be determined.

For example, as shown in FIG. 3, the first terminal A receives the second information transmitted by candidate terminal F and candidate terminal D. The signal-to-noise ratios of the second information transmitted by candidate terminal F and the candidate terminal D can be compared. The signal-to-noise ratio of terminal F is larger, and the signal quality of terminal F is better. Thus, terminal F can be determined as the target terminal. As another example, as shown in FIG. 4, second terminal E receives the second information transmitted by terminal B and terminal D. The carrier-to-interference ratios of the second information transmitted by terminal B and terminal D can be compared. The carrier-to-interference ratio of terminal D is larger, and terminal D is determined as the target terminal.

In some other embodiments, obtaining the signal quality of each candidate terminal can include:
controlling the candidate terminal to receive third information from the first terminal or the second terminal;
determining the signal quality of the third information according to the third information; and
determining the signal quality of the third information as the signal quality of the candidate terminal.

In some embodiments, the first terminal can send the third information, or the second terminal can send the third information. The candidate terminal can receive the third information transmitted by the first terminal or the second terminal. By taking the first terminal as an example, the candidate terminals can receive the third information transmitted by the first terminal to determine the signal quality of the third information. Then, the signal qualities of the candidate terminals can be determined. Further, by comparing the signal qualities of the candidate terminals, the candidate terminal with the best signal quality can be determined as the target terminal.

The signal quality of the third information can be similar to the signal quality of the second information, which is not further described here.

In some other embodiments, obtaining the signal quality of each candidate terminal can include:
controlling the first terminal and the second terminal to receive the second information from the candidate terminal;
determining the signal quality of the second information according to the second information received by the first terminal and the second information received by the second terminal; and
determining the signal quality of the second information as the signal quality of the candidate terminal.

In some embodiments, the candidate terminal can transmit the second information. The first terminal and the second terminal can receive the second information sent by the candidate terminal. The signal quality of the second information received by the first terminal and the signal quality of the second information received by the second terminal can be considered. For example, the signal quality of the second information received by the first terminal and the signal quality of the second information received by the second terminal can be averaged or weighted-averaged as the signal quality of the second information and the signal quality of the candidate terminal. Thus, the accuracy of determining the signal quality of the candidate terminal can be improved to further improve the accuracy of determining the target terminal.

In some other embodiments, obtaining the signal quality of each candidate terminal can include:
controlling the candidate terminal to receive the third information from the first terminal and the second terminal;
determining the signal quality of the third information according to the third information received from the first terminal and the third information received from the second terminal; and
determining the signal quality of the third information as the signal quality of the candidate terminal.

In some embodiments, the first terminal and the second terminal can send the third information. The candidate terminal can receive the third information sent by the first terminal and the third information sent by the second terminal. The signal quality of the third information received by the candidate terminal from the first terminal and the signal quality of the third information received by the candidate terminal from the second terminal can be considered. For example, averaging or weighted-averaging can be performed to determine the signal quality of the third information and the signal quality of the candidate terminal. Thus, the accuracy of determining the signal quality of the candidate terminal can be determined, and the accuracy of determining the target terminal can be improved.

At S202, the target terminal is controlled to obtain the first information from the first information transmission terminal.

The first information transmission terminal can be the terminal that transmits the information and can be any terminal in the communication system except for the target terminal. The first information can be the information sent by the first information transmission terminal.

The first information transmission terminal can transmit the first information to the target terminal. Subsequently, the target terminal can forward the first information to other terminals to realize relay communication within the communication system.

At S203, the target terminal is controlled to forward the obtained first information.

In some embodiments, the communication method can further include:
controlling the target terminal to store the obtained first information.

In S203, controlling the target terminal to forward the obtained first information can include:
controlling the target terminal to send the stored first information.

In some embodiments, after receiving the first information, the target terminal can first store the first information and then forward the stored first information. Thus, the number of times of transmitting the information can be reduced, and the energy consumption of the target terminal can be lowered. The implementation can be suitable for scenarios having low information delay requirements. For example, in an outdoor sports scenario, the first information can be information indicating resource replenishment.

In some embodiments, controlling the target terminal to send the stored first information can include:
controlling the target terminal to periodically send the stored first information.

Embodiments of the present disclosure do not limit the time length of "periodically," which can be a predetermined transmission period for periodical transmission, e.g., 5 minutes. The target terminal can first store the first information and then transmit the first information periodically. Thus, the target terminal can be prevented from continuously transmitting the information to consume more energy to save energy.

In some embodiments, the plurality of terminals can further include a first information reception terminal. Controlling the target terminal to transmit the stored first information can include:
obtaining a first information reception request sent by the first information reception terminal; and
transmitting the stored first information according to the first information reception request.

In some embodiments, when the first information reception terminal needs to receive the first information, the target terminal can be notified by sending the first information reception request. The target terminal can send the stored first information to the first information reception terminal. Thus, the target terminal can be prevented from continuously sending the first information. The first information reception terminal may need to continuously receive the first information to save the energy consumption of the target terminal and the first information.

In some embodiments, according to the first information reception request, the stored first information can be sent. A point-to-point communication method can be adopted. That is, the target terminal can send the first information to the first information reception terminal. In some other embodiments, a communication method of broadcasting or multi-broadcasting can be adopted to send the first information to at least one terminal. The at least one terminal can include the first information reception terminal. In some embodiments, the first information can include a reception terminal identifier. The at least one terminal can choose to read or not read the first information according to the reception terminal identifier. For example, the at least one terminal can determine that the reception terminal identifier matches the terminal identifier of the terminal, the first information can be read. Otherwise, if the reception terminal identifier does not match the terminal identifier of the terminal, the first information may not be read.

Thus, the communication method of embodiments of the present disclosure can be applied to the communication system. The communication system can include the plurality of terminals. By determining the target terminal form the plurality of terminals, and forwarding the information by the target terminal, the relay communication between different terminals of the communication system can be realized. Since the relay device can be the terminal of the plurality of terminals, an additional relay device may not be needed. Thus, the communication cost can be saved, and the flexibility of the communication can be improved.

In some embodiments, if the first information transmission terminal is the first terminal, and the first information reception terminal is the second terminal, in S202, controlling the target terminal to obtain the first information from the first information transmission terminal can include:
controlling the target terminal to receive the first information from the first terminal.

The communication method can further include:
controlling the second terminal to receive the first information forwarded by the target terminal.

In some embodiments, the first terminal of the communication system may need to send the information to the second terminal. The predetermined position can be determined according to the position of the first terminal and the position of the second terminal to determine the target terminal. Then, the relay communication between the first terminal and the second terminal can be realized through the target terminal.

In some embodiments, the communication method can further include:
obtaining positions of the plurality of terminals;
determining whether the third terminal is detected from the plurality of terminals according to the positions of the plurality of terminals, where the position of the third terminal can be outside the predetermined range; and
when the third terminal is detected, controlling the target terminal to send warning information to the third terminal.

The predetermined range can be determined according to the largest communication distance. For example, the largest distance in which the two terminals can communicate can be 50m, and the predetermined range can be 45m.

By detecting the third terminal and sending the warning information, the user holding the third terminal can be notified that the user is about to be outside the communication distance in which the third terminal cannot communicate with other terminals.

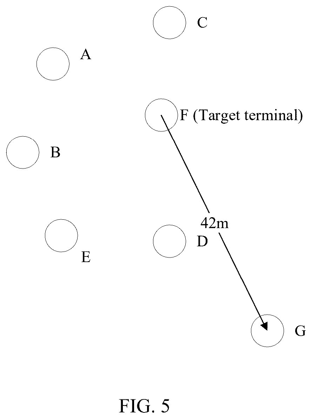

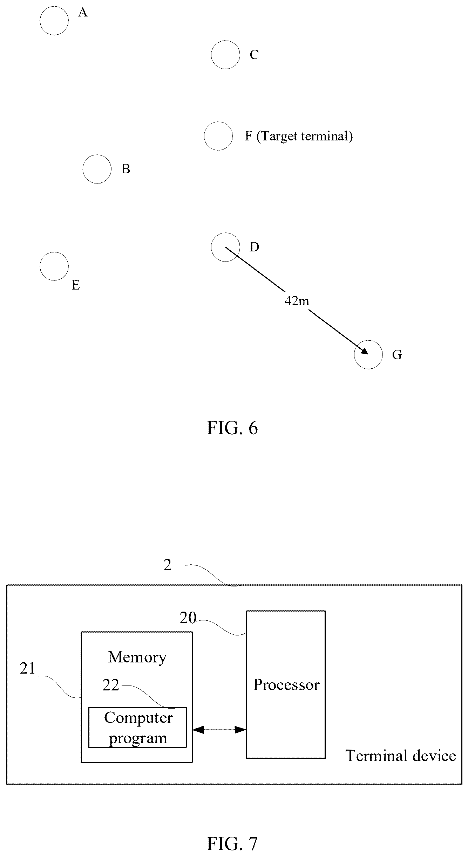

Detection of the third terminal is illustratively described below in connection with FIG. 5 and FIG. 6.

In some embodiments, the distance between the third terminal and the target terminal can exceed the predetermined range.

As shown in FIG. 5, the plurality of terminals include terminal A to terminal G. Terminal F is the target terminal, and the predetermined range is 40m. Target terminal F can obtain the positions of terminal A to terminal G to obtain the distances between target terminal F and terminal A to terminal E and terminal G. The distance between terminal G and terminal F can be detected to be 42m. Thus, terminal G is outside the predetermined range. Terminal G can be determined as the third terminal. Terminal F can send the warning information to third terminal G.

In some other embodiments, the distance between the third terminal and the terminal closest to the third terminal can exceed the predetermined range.

As shown in FIG. 6, the plurality of terminals include terminal A to terminal G. Terminal is the target terminal. The predetermined range can be 40m. The target terminal detects that the distance between terminal G and terminal D closest to terminal G is 42m outside the predetermined range. Then, terminal G can be determined as the third terminal. Target terminal F can send warning information to third terminal G to notify the user holding third terminal G that the user is about to be outside the communication range to prevent terminal G from continuously moving away to be disconnected.

The present disclosure further provides the communication system, including the plurality of terminals. The plurality of terminals can include the first information transmission terminal. The system further includes at least one processor. The processor can be configured to:
determine the target terminal from the plurality of terminals, the first distance between the target terminal and the predetermined position being less than or equal to the predetermined distance;
control the target terminal to obtain the first information from the first information transmission terminal; and
control the target terminal to forward the obtained first information.

In some embodiments, the processor can be further configured to:
obtain the first distance between each terminal and the predetermined position; and
determine the terminals with the first distances less than or equal to the predetermined distance as the candidate terminals.

When determining the target terminal from the plurality of terminals, the processor is configured to:
determine the target terminal from the candidate terminals.

In some embodiments, the processor can also be configured to:
obtain the first distance between each candidate terminal and the predetermined position.

When determining the target terminal from the candidate terminals, the processor can be configured to:
determine the candidate terminal with the smallest first distance to the predetermined position as the target terminal.

In some embodiments, the processor can also be configured to:
obtain the signal quality of each candidate terminal.

When determining the target terminal from the candidate terminals, the processor can be configured to:
determine the candidate terminal with the best signal quality as the target terminal.

In some embodiments, the processor can also be configured to:
determine the first terminal and the second terminal from the plurality of terminals.

The second distance between the first terminal and the second terminal can be greater than the second distance between any two terminals except for the first terminal and the second terminal.

In some other embodiments, the first terminal can be configured to send the first information, and the second terminal can be configured to receive the first information sent by the first terminal.

When obtaining the signal quality of each candidate terminal, the processor can be configured to:
control the first terminal or the second terminal to receive second information from the candidate terminals;
determine the signal quality of the second information according to the second information;
determine the signal quality of the second information as the signal quality of the candidate terminal; or
control the candidate terminal to receive the third information from the first terminal or the second terminal;
determine the signal quality of the third information according to the third information; and
determine the signal quality of the third information as the signal quality of the candidate terminal.

In some embodiments, the processor can also be configured to:
determine the first terminal and the second terminal from the plurality of terminals.

The second distance between the first terminal and the second terminal can be greater than the second distance between any other two terminals in the plurality of terminals, excluding the first terminal and the second terminal.

When determining the target terminal from the plurality of terminals, the processor can be configured to:
determine the predetermined position according to the position of the first terminal and the position of the second terminal; and
determine the target terminal based on the predetermined position.

In some embodiments, when determining the first terminal and the second terminal from the plurality of terminals, the processor can also be configured to:
obtain the second distance between all pairs of terminals among the plurality of terminals; and
determine the two terminals with the largest second distance as the first terminal and the second terminal.

In some embodiments, the processor is also configured to:
determine the first information transmission terminal as the first terminal.

When controlling the target terminal to obtain the first information from the first information transmission terminal, the processor can be configured to:
control the target terminal to receive the first information from the first terminal.

In some embodiments, the plurality of terminals can further include the first information reception terminal configured to receive the first information. The processor can be further configured to:
determine the first information reception terminal as the second terminal; and
control the second terminal to receive the first information forwarded by the target terminal.

In some embodiments, the processor can be further configured to:
obtain the positions of the plurality of terminals;
determine whether the third terminal is detected in the plurality of terminals according to the positions of the plurality of terminals, the position of the third terminal being outside the predetermined range; and
when the third terminal is detected, control the target terminal to send warning information to the third terminal.

In some embodiments, the processor can be further configured to:
control the target terminal to store the obtained first information.

When controlling the target terminal to forward the obtained first information, the processor can be configured to:
control the target terminal to send the stored first information.

In some embodiments, when controlling the target terminal to send the stored first information, the processor can be configured to:
control the target terminal to periodically send the stored first information.

In some embodiments, the plurality of terminals can further include the first information reception terminal. When controlling the target terminal to send the stored first information, the processor can be configured to:
obtain the first information reception request sent by the first information reception terminal; and
send the stored first information according to the first information reception request.

FIG. 7 is a schematic structural diagram of a terminal device according to some embodiments of the present disclosure. As shown in FIG. 7, the terminal device 2 includes at least one processor 20, a memory 21, and a computer program 22 stored in the memory 21 and executed by the at least one processor 20. The processor 20 can execute the computer program 22 to realize the processes of any method of embodiments of the present disclosure.

In some embodiments, the processor 20 can be configured to:
determine the target terminal from the plurality of terminals, the first distance between the target terminal and the predetermined position being smaller than or equal to the predetermined distance;
control the target terminal to obtain the first information from the first information transmission terminal; and
control the target terminal to forward the obtained first information.

In some embodiments, the processor 20 can be configured to:
obtain the first distance between each terminal and the predetermined position; and
determine the terminal having the first distance less than or equal to the predetermined distance as the candidate terminal.

When determining the target terminal from the plurality of terminals, the processor 20 can be configured to:
determine the target terminal from the candidate terminals.

In some embodiments, the processor 20 can be further configured to:
obtain the first distance between each candidate terminal and the predetermined position.

When determining the target terminal from the candidate terminals, the processor 20 can be configured to:
determine the candidate terminal having the smallest first distance to the predetermined position as the target terminal.

In some embodiments, the processor 20 can be further configured to:
obtain the signal quality of each candidate terminal.

When determining the target terminal from the candidate terminal, the processor 20 can be configured to:
determine the candidate terminal with the best signal quality as the target terminal.

In some embodiments, the processor 20 can be configured to:
determine the first terminal and the second terminal from the plurality of terminals.

The second distance between the first terminal and the second terminal can be greater than the second distance between any other two terminals of the plurality of terminals excluding the first terminal and the second terminal, or
the first terminal can be configured to send the first information, and the second terminal can be configured to receive the first information sent by the first terminal.

When obtaining the signal quality of each candidate terminal, the processor 20 can be configured to:
control the first terminal or the second terminal to receive the second information from the candidate terminal;
determine the signal quality of the second information according to the second information;
determine the signal quality of the second information as the signal quality of the candidate terminal; or
control the candidate terminal to receive the third information from the first terminal or the second terminal;
determine the signal quality of the third information according to the third information; and
determine the signal quality of the third information as the signal quality of the candidate terminal.

In some embodiments, the processor 20 can be further configured to:
determine the first terminal and the second terminal from the plurality of terminals.

The second distance between the first terminal and the second terminal can be greater than the second distance between any other two terminals of the plurality of terminals excluding the first terminal and the second terminal.

When determining the target terminal from the plurality of terminals, the processor 20 can be configured to:
determine the predetermined position according to the positions of the first terminal and the second terminal; and
determine the target terminal according to the predetermined position.

In some embodiments, when determining the first terminal and the second terminal from the plurality of terminals, the processor 20 can be configured to:
obtain the second distances between all pairs of terminals of the plurality of terminals; and
determine the two terminals having the largest second distance as the first terminal and the second terminal.

In some embodiments, the processor 20 can be further configured to:
determine the first information transmission terminal as the first terminal.

When controlling the target terminal to obtain the first information from the first information transmission terminal, the processor 20 can be configured to:
control the target terminal to receive the first information from the first terminal.

In some embodiments, the plurality of terminals can further include the first information reception terminal configured to receive the first information. The processor 20 can be configured to:
determine the first information reception terminal as the second terminal; and
control the second terminal to receive the first information forwarded by the target terminal.

In some embodiments, the processor 20 can be further configured to:
obtain the positions of the plurality of terminals;
determine whether the third terminal is detected in the plurality of terminals according to the positions of the plurality of terminals, the position of the third terminal being outside the predetermined range; and
when the third terminal is detected, control the target terminal to send the warning information to the third terminal.

In some embodiments, the processor 20 can be further configured to:
control the target terminal to store the obtained first information.

When controlling the target terminal to forward the obtained first information, the processor 20 can be configured to:
control the target terminal to send the stored first information.

In some embodiments, when controlling the target terminal to send the stored first information, the processor 20 can be configured to:
control the target terminal to periodically send the stored first information.

In some embodiments, the plurality of terminals can further include the first information reception terminal. When controlling the target terminal to sed the stored first information, the processor 20 can be configured to:
obtain the first information reception request sent by the first information reception terminal; and
send the stored first information according to the first information reception request.

The processor 20 can be a Central Processing Unit (CPU). The processor 20 can also be other general-purpose processors, Digital Signal Processors (DSP), Application Specific Integrated Circuits (ASIC), Field-Programmable Gate Arrays (FPGA), or other programmable logic devices, discrete gates, or transistor logic devices, discrete hardware components, etc. The general-purpose processor can be a microprocessor, or the processor can be any general processor, etc.

The memory 21 can include non-volatile and/or volatile memory. The non-volatile memory can include Read-Only Memory (ROM), Programmable ROM (PROM), Electrically Programmable ROM (EPROM), Electrically Erasable Programmable ROM (EEPROM), or flash memory. The volatile memory can include Random Access Memory (RAM) or external highspeed cache memory. For illustration, but not limitation, RAM can include various forms, such as Static RAM (SRAM), Dynamic RAM (DRAM), Synchronous DRAM (SDRAM), Double Data Rate SDRAM (DDRSDRAM), Enhanced SDRAM (ESDRAM), Synchronous Link (Synchlink) DRAM (SLDRAM), Rambus Direct RAM (RDRAM), Direct Memory Bus Dynamic RAM (DRDRAM), and Memory Bus Dynamic RAM (RDRAM), etc.

Embodiments of the present disclosure also provide a computer-readable storage medium. The computer-readable storage medium stores the computer program that, when executed by the processor, causes the processor to realize the processes of method embodiments above.

Embodiments of the present disclosure provide a computer program product. When the computer program product is executable the terminal device, the terminal device can realize the processes of method embodiments above.

Those skilled in the art can understand that if the integrated units described above are implemented as software functional units and sold or used as independent products, the software functional units can be stored in a computer-readable storage medium. Based on this understanding, all or a part of the processes of the above methods of embodiments of the present disclosure can be implemented by instructing the relevant hardware to implement through the computer program. The computer program can be stored in the computer readable storage medium. When the computer program is executed by the processor, the processes of method embodiments above can be implemented. The computer program can include computer program codes. The computer program codes can be in the form of source code, object code, executable files, or certain intermediate forms, etc. The computer-readable medium can include at least any entity or apparatus that can carry the computer program code to the photo-taking apparatus/terminal device, recording media, computer memory, Read-Only Memory (ROM), Random Access Memory (RAM), electric carrier wave signals, telecommunication signals, and software distribution media, such as USB drives, external hard drives, disks, or optical disks, etc. In certain jurisdictions, according to legislation and patent practices, computer-readable media cannot be electric carrier wave signals or telecommunication signals.

Those skilled in the art can understand that in the above embodiments, the description of each embodiment has its own focus. Any part not detailed or recorded in one embodiment can refer to the relevant description in other embodiments.

Those skilled in the art can understand that the units and algorithm processes described in connection with embodiments of the present disclosure can be implemented by electronic hardware, or a combination of the computer software and the electronic hardware. Whether the function is implemented by hardware or software depends on the specific application of the technical solution and the design restriction condition. Those skilled in the art can implement the description in different methods for each special application. Those skilled in the art can describe the function in different methods for each special application. However, the implementation should not be considered as exceeding the scope of the present disclosure.

The embodiments described above are intended to illustrate the technical solutions of the present disclosure and not to limit the technical solutions. Although the above embodiments have been described in detail, those of ordinary skill in the art should understand that modifications can still be made to the technical solutions of embodiments of the present disclosure, or some technical features can be equivalently substituted. These modifications or substitutions do not cause the essence of the technical solutions departing from the spirit and scope of the technical solutions of embodiments of the present disclosure and should be within the scope of the present disclosure.

## Claims

1. A communication method, applied to a communication system, the communication system including a plurality of terminals, and the plurality of terminals including a first information transmission terminal, the method comprising:
determining a target terminal from the plurality of terminals, a first distance between the target terminal and a predetermined position being less than or equal to a predetermined distance;
controlling the target terminal to obtain first information from the first information transmission terminal; and
controlling the target terminal to forward the obtained first information.

2. The method according to claim 1, further comprising:
obtaining the first distance between each of the plurality of terminals and the predetermined position; and
determining terminals with first distance less than or equal to the predetermined distance as candidate terminals;
wherein determining the target terminal from the plurality of terminals includes:
determining the target terminal from the candidate terminals.

3. The method according to claim 2, further comprising:
obtaining the first distance between each of the candidate terminals and the predetermined position;
wherein determining the target terminal from the candidate terminals includes:
determining a candidate terminal with a smallest first distance to the predetermined position as the target terminal.

4. The method according to claim 2, further comprising:
obtaining a signal quality of each of the candidate terminals;
wherein determining the target terminal from the candidate terminals includes:
determining a candidate terminal with best signal quality as the target terminal.

5. The method according to claim 4, further comprising:
determining a first terminal and a second terminal from the plurality of terminals;
wherein:
a second distance between the first terminal and the second terminal is greater than second distances between any other two terminals of the plurality of terminals excluding the first terminal and the second terminal; or
the first terminal is configured to send the first information, and the second terminal is configured to receive the first information sent by the first terminal;
wherein obtaining the signal quality of each candidate terminal of the candidate terminals includes:
controlling the first terminal or the second terminal to receive second information from the candidate terminal;
determining a signal quality of the second information according to the second information;
determining the signal quality of the second information as the signal quality of the candidate terminal; or
controlling the candidate terminal to receive third information from the first terminal or the second terminal;
determining a signal quality of the third information according to the third information; and
determining the signal quality of the third information as the signal quality of the candidate terminal.

6. The method according to claim 1, further comprising:
determining a first terminal and a second terminal from the plurality of terminals;
wherein a second distance between the first terminal and the second terminal is greater than second distances between any other two terminals of the plurality of terminals excluding the first terminal and the second terminal;
wherein determining the target terminal from the plurality of terminals includes:
determining the predetermined position according to positions of the first terminal and the second terminal; and
determining the target terminal according to the predetermined position.

7. The method according to claim 6, wherein determining the first terminal and the second terminal from the plurality of terminals includes:
obtaining second distances between all pairs of terminals of the plurality of terminals; and
determining two terminals with a largest second distance as the first terminal and the second terminal.

8. The method according to claim 1, further comprising:
determining the first information transmission terminal as a first terminal;
wherein controlling the target terminal to obtain the first information from the first information transmission terminal includes:
controlling the target terminal to receive the first information from the first terminal.

9. The method according to claim 8, wherein the plurality of terminals further include a first information reception terminal, the method further comprising:
determining the first information reception terminal as a second terminal; and
controlling the second terminal to receive the first information forwarded by the target terminal.

10. The method according to claim 1, further comprising:
obtaining positions of the plurality of terminals;
determining whether a third terminal is detected in the plurality of terminals according to the positions the plurality of terminals, a position of the third terminal being outside a predetermined range; and
when the third terminal is detected, controlling the target terminal to send warning information to the third terminal.

11. The method according to claim 1, further comprising:
controlling the target terminal to store the obtained first information;
wherein controlling the target terminal to forward the obtained first information includes:
controlling the target terminal to send the stored first information.

12. The method according to claim 11, wherein controlling the target terminal to send the stored first information includes:
controlling the target terminal to periodically send the stored first information.

13. The method according to claim 11, wherein the plurality of terminals also include a first information reception terminal, and controlling the target terminal to send the stored first information includes:
obtaining a first information reception request sent by the first information reception terminal; and
according to the first information reception request, sending the stored first information.

14. A communication system, comprising a plurality of terminals and at least one processor, the processor being configured to implement the method according to any one of claims 1-13.

15. A computer-readable storage medium storing a computer program that, when executed, causes the method according to any one of claims 1-13 to be implemented.
